# EUROPEAN PATENT APPLICATION

(11) **EP 2 495 082 A1**
(43) Date of publication of application: **05.09.2012**
(21) Application number: 12157394.3
(22) Date of filing: 28.02.2012
(51) Int. Cl.: B29C 35/08, B29C 39/10, G01N 17/04

(54) **Method to manufacture a sensor**

(30) Priority: 01.03.2011 US 201113038070
(71) Applicant: General Electric Company, Schenectady, New York 12345 (US)
(72) Inventor: Hefner, Rebecca Evelyn, Greenville, SC South Carolina 29615 (US)
(74) Representative: Cleary, Fidelma

(57) **Abstract**

A method to manufacture a sensor is provided and includes forming a foamed core (10) of a first material with a hole (20) defined therein, inserting a rod (30) into the hole (30), filling the core with a slurry (40) of a second material and curing the second material.

## Description

### BACKGROUND OF THE INVENTION

The subject matter disclosed herein relates to a sensor apparatus.

Sensors are used in various industries to sense conditions at various locations throughout different types of systems. Often, these industries depend on machinery that operates in extreme environments, such as gas turbine engines, which generate high temperatures and pressures and expose metallic components to molten salts. In these cases, the sensors must be able to withstand such conditions.

In the case of sensors used with gas turbine engines or other similar devices, the sensors are often designed as hot corrosion sensors that include metallic or metal alloy electrodes secured within a ceramic casing. The electrodes are employed to conduct the necessary sensing operations and the ceramic can be selected for its ability to withstand high temperatures and pressures and for robustness to exposure to molten salts. This robustness is especially important where the gas turbine engines use dirty fuels containing high amounts of sulfur and vanadium.

A problem with the ceramic of hot corrosion sensors exists, however, in that it can be difficult to machine holes in the ceramic that can accept electrode insertion. Additionally, it is nearly impossible to machine the holes to have a tight fit with the electrodes, such that liquids cannot seep into and between the electrode and ceramic interface.

### BRIEF DESCRIPTION OF THE INVENTION

According to one aspect, the invention resides in a method to manufacture a sensor and includes forming a foamed core of a first material with a hole defined therein, inserting a rod into the hole, filling the core with a slurry of a second material and curing the second material.

The core may define multiple holes therein, the inserting comprising inserting a rod into each of the multiple holes.

The method may include estimating conditions of an environment in which the sensor is to be deployed and ascertaining a type of test the sensor is to be deployed for, and selecting one or more of the first and second materials and a material of the rod in accordance with one or more of the estimated conditions, the type of the test and for coefficient of thermal expansion matching.

These and other advantages and features will become more apparent from the following description taken in conjunction with the drawings.

### BRIEF DESCRIPTION OF THE DRAWINGS

Embodiments of the present invention will now be described, by way of example only, with reference to the accompanying drawings, in which:
FIG. 1 is a perspective view of a foamed core matrix;
FIG. 2 is a perspective view of the foamed core matrix of FIG. 1 with holes drilled therein;
FIG. 3 is a perspective view of electrodes inserted into the holes of FIG. 2; and
FIG. 4 is a perspective view of the electrodes of FIG. 3 being secured within cured slurry.

The detailed description explains embodiments of the invention, together with advantages and features, by way of example with reference to the drawings.

### DETAILED DESCRIPTION OF THE INVENTION

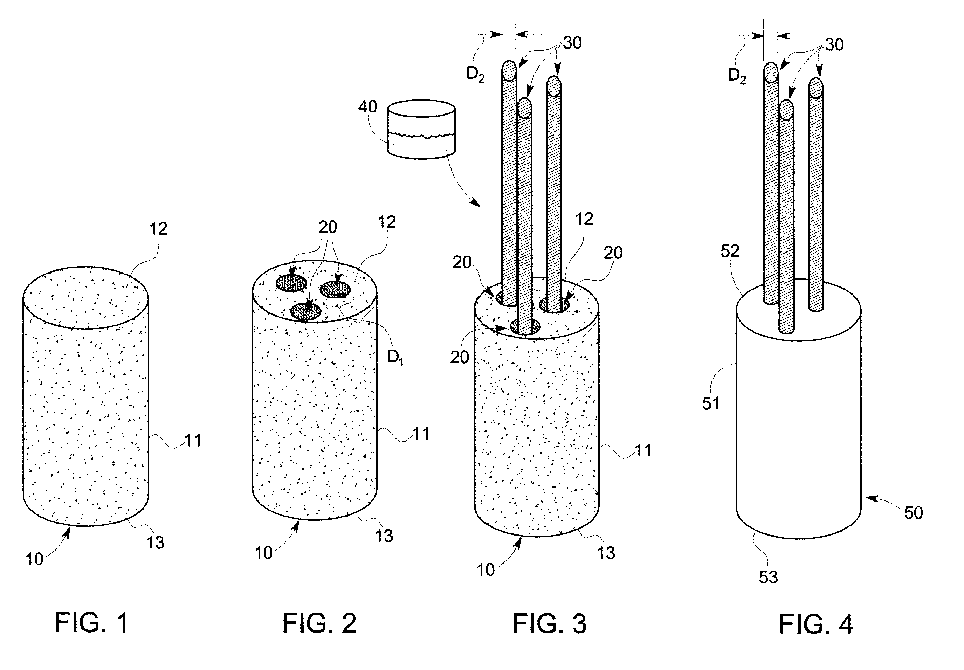

With reference to FIGS. 1-4, a method to manufacture a sensor is provided. The sensor can be used to sense how a given material will react in various environments, such as, for example, an environment characterized by high temperatures and the presence of corrosive materials and an environment characterized by high temperatures. As will be discussed below, the sensor may include a sensing element and components to secure the sensing element that are selected for their fitness for use in the sensing environment and for their fitness for the particular type of test being conducted.

As shown in FIG. 1, a foamed core matrix 10 of a first material, such as ceramic or another similar material, is formed. The foamed core matrix 10 should be insertable into a tubular housing and, as such, the foamed core matrix 10 may have a tubular body 11 with opposing first and second ends 12, 13. As the foamed core matrix 10 includes ceramic material (or another similar material), the foamed core matrix 10 may be substantially firm and rigid.

As shown in FIG. 2, the foamed core matrix 10 is formed to defme a hole 20 therein. The hole 20 may be formed by at least one of a drilling process, a machining process or another similar process. The hole 20 has a diameter, D1, and is recessed from at least one of the first and second ends 12, 13 of the foamed core matrix 10. In accordance with embodiments, the hole 20 extends along substantially an entire length of the tubular body 11. Tolerances for the dimensions of the hole 20, including the diameter, D1, are relatively liberal.

As shown in FIG. 3, a rod 30 is inserted into the hole 20. The rod 30 includes an electrically conductive material formed into an electrode that can be electrically coupled to sensing devices and circuitry. The rod 30 has a diameter, D2, that is smaller than the diameter, D1, of the hole 20 such that insertion of the rod 30 is facilitated and such that the forming of the hole 20 is not limited to strict tolerances, as mentioned above. Where the foamed core matrix 10 is tubular, the rod 30 may be inserted from at least one of the first and second ends 12, 13 and may extend longitudinally along substantially the entire length of the tubular body 11.

Still referring to FIG. 3, the foamed core matrix 10 is then filled with a slurry 40 of a second material. In accordance with embodiments, the filling may be achieved by way of an injection of the slurry 40 into the foamed core matrix 10. This injection fills air spaces in the foamed core matrix 10 and, additionally, fills spaces defined about the rod 30 at the interface between the rod 30 and the sidewalls of the hole 20. The slurry 40 may include ceramic slurry or another similar material. In accordance with further embodiments, the filling may be achieved by way of the generation of a vacuum or low pressure environment that is capable of pulling the slurry 40 into the foamed core matrix 10 in accordance with pressure gradients to which the slurry 40 is exposed. In accordance with still other embodiments, the filling may be achieved by way of a plug whereby the slurry 40 is pushed into the foamed core matrix 10 by the plug or another similar device.

In accordance with embodiments, a material of the slurry 40 may be selected such that, when the slurry is cured (see FIG. 4), the cured slurry will have a coefficient of thermal expansion (CTE) that is substantially similar to the CTE of the material of the rod 30. In this way, stresses generated in either the rod 30 or the cured slurry and resulting damages that would otherwise be caused by unmatched thermal expansion due to exposure to high temperatures can be avoided.

As mentioned above and, as shown in FIG. 4, the second material of the slurry 40 is cured by at least one or more of heat and ultraviolet light (UV) treatment. The cured slurry 50 thus assumes a substantially similar shape as that of the foamed core matrix 10. As such, in the embodiments illustrated in FIGS. 1-4, the cured slurry 50 may have a substantially tubular body 51 with opposing first and second ends 52, 53. The cured slurry 50 is thus also securely hardened about the rod 30 with substantially limited space defined about outer surfaces of the rod 30. That is, at least a portion of the electrode 30 will tightly fit in the cured slurry 50 and the seepage of liquids into and between the electrode 30 and the cured slurry 50 will be substantially prevented.

As shown in FIGS. 2-4, the foamed core matrix 10 may be formed to define multiple holes 20 into each of which a rod 30 is inserted. Thus, the cured slurry 50 can be provided to secure multiple rods 30.

In accordance with further embodiments, selection of the first and second materials relates to CTE matching, as described above, and also to the ability of the second material to flow into the first material. That is, the material of the slurry 40 and the material of the foamed core matrix 10 may both be selected such that the slurry 40 is able to flow into and fill the foamed core matrix 10. However, as the CTE matching consideration is generally more important than the flow consideration, the flow problem may persist and, such cases, flow of the slurry 40 can be encouraged gravitationally and/or through the use of vacuum formation, plungers and/or other similar tools.

In accordance with still further embodiments, selection of the first and second materials as well as the materials of the rod 30 may relate to considerations of a sensing environment in which the sensor is to be deployed, considerations of a type of test the sensor will be used in and/or considerations related to material costs and ease of manufacture. For example, varied tests where cost and manufacturing concerns are limited may be concerned with the corrosion of materials in high temperature/molten salt corrosive environments, the corrosion of materials in saline environments, the electrical response of materials to high temperature environments and/or the response of materials to vibration.

In the example where it is ascertained that the test is particularly concerned with determining how a material of a gas turbine engine will corrode in an environment characterized by high temperatures and the presence of molten salts that will tend to corrode gas turbine engine materials, the rod 30 may be formed of the gas turbine engine material and the first and second materials may be selected for CTE matching with the rod material and for the ability to withstand and survive the estimated conditions of the test (i.e., the high temperature/molten salt corrosive environment). That is, the first and second materials may be ceramic, as noted above. In this way, a test run in which the rod 30 corrodes due to exposure to the high temperature/molten salt corrosive environment while the first and second materials remain substantially intact can be conducted to ascertain varied information as to a nature of the corrosion of the rod 30. This varied information can then be employed in the design of the gas turbine engine components in which the material may be used.

It is to be understood that that first and second materials need not be ceramic especially where ceramic would be inappropriate for use in the sensing environment in which the sensor is to be deployed or the type of test the sensor is being deployed for. For example, ceramic would not be appropriate for use in a saline environment or where the test is concerned with response to vibration. In this case, use of epoxy resin, for example, may be preferred.

In accordance with further aspects of the invention and, as shown in FIGS. 1-4, a sensor apparatus is provided and includes a rod 30 and a cured slurry 50 to secure at least a portion of the rod 30 therein where the cured slurry 50 is, for example, a ceramic material, which is contained in a foamed core matrix 10 of, for example, a ceramic material. As mentioned above, the cured slurry 50 has a CTE that is substantially similar to a CTE of material of the rod 30. Also, the cured slurry 50 has a tubular body 51 and the rod 30 may extend substantially entirely through the tubular body 51. Also as mentioned above, the rod 30 may be provided as multiple rods 30, which are each secured by the cured slurry 50.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method to manufacture a sensor, comprising:
forming a foamed core (10) of a first material with a hole (20) defined therein;
inserting a rod (30) into the hole (20);
filling the core (10) with a slurry (40) of a second material; and
curing the second material.

2. The method according to claim 1, further comprising one or more of drilling and machining the hole (20) in the core (10).

3. The method according to claim 1 or 2, wherein the first material comprises ceramic.

4. The method according to claim 1, 2 or 3 wherein the rod (30) comprises an electrically conductive material.

5. The method according to any of claims 1 to 4, wherein the rod (30) has a diameter that is smaller than a diameter of the hole.

6. The method according to any of claims 1 to 5, wherein the filling comprises at least one or more of injecting, pushing and vacuuming the slurry (40) into the core to fill air spaces therein and about the rod (30).

7. The method according to any preceding claim, wherein the slurry (40) comprises ceramic slurry.

8. The method according to any preceding claim, further comprising tailoring a material of the slurry (40) to have, when cured, a coefficient of thermal expansion substantially similar to that of material of the rod (30).

9. The method according to claim 8, further comprising tailoring at least one of a material of the core (10), the slurry (40) and the rod (30) in accordance with at least one or more of an environment in which the sensor is to be deployed and a type of test the sensor is to be deployed for.

10. The method according to any preceding claim, wherein the curing comprises one or more of heat and UV treatment.

11. The method according to any preceding claim, wherein the forming comprises forming the core with a tubular shape.

12. The method according to claim 11, wherein the hole is recessed from a longitudinal end of the tubular core.

13. The method according to claim 12, wherein the hole extends along substantially an entire length of the tubular core.

14. The method according to any preceding claim, wherein the core defines multiple holes therein, the inserting comprising inserting a rod into each of the multiple electrode holes.

15. The method of any preceding claim, further comprising:
estimating conditions of an environment in which the sensor is to be deployed and ascertaining a type of test the sensor is to be deployed for; and
selecting one or more of the first and second materials and a material of the rod in accordance with one or more of the estimated conditions, the type of the test and for coefficient of thermal expansion matching.

16. The method according to claim 15, further comprising selecting the second material and the material of the rod to have matching coefficients of thermal expansion.
